# EUROPEAN PATENT APPLICATION

(11) **EP 1 698 223 A1**
(43) Date of publication of application: **06.09.2006**
(21) Application number: 05425119.4
(22) Date of filing: 04.03.2005
(51) Int. Cl.: A01G 9/24, A01G 9/22

(54) **System for total and partial opening and covering of a greenhouse covered by a sheet or film**

(71) Applicant: Longarini, Franco, 04019 Terracina (LT) (IT)
(72) Inventor: Longarini, Franco, 04019 Terracina (LT) (IT)
(74) Representative: Iannone, Carlo Luigi

(57) **Abstract**

The invention concerns a system for total and partial opening of a greenhouse (1) covered by a sheet or film (4), said greenhouse providing at least a aisle (2), said aisle being longitudinally provided with a plurality of supports (3) and arches, said system being characterised in that it provides a winding assembly for closing the greenhouse and a winding assembly for opening the greenhouse, each assembly providing a sheet winding tube, extending all along the greenhouse, and provided, at least on one of its ends, with driving means, at least two lower elements for guiding the rotation of the winding tube, in correspondence of each support of the greenhouse, at least an upper element for guiding the rotation of the winding tube, in correspondence of each support of the greenhouse, and at least an element for guiding the sheet during winding and unwinding about said winding tube, the system further comprising first means for fixing the sheet to the winding assembly for closing the greenhouse and second means for fixing the sheet to the winding assembly for opening the greenhouse.

## Description

The present invention relates to a system for total and partial opening of a greenhouse covered by a sheet or film.

More specifically, the invention concerns a system of the above kind allowing to easily obtaining the winding and unwinding of the covering sheet of a greenhouse on the basis of the specific needing.

As it is well known, greenhouses, which are comprised of very long structures, having arcades side by side, and covered by a plastic material sheet, supported by a support structure, usually comprised of support arches and poles.

In some cases, also shadowing and darkening sheets or like are stretched above greenhouses.

It is also known that covering of greenhouses is not required all along the year, and the covering must be for example removed during the sunniest seasons or at least partially opened during other periods of the year. Obviously, needing vary according to the cultivation inside the greenhouse.

At present, solutions are not available allowing complete covering and opening of the greenhouse in an easy, quick way, without ruining the covering sheet.

Substantially, in the present greenhouses, complete opening and covering occurs manually, laterally displacing the sheet and accumulating on a side, before positioning the same afterwards.

It is immediately evident that said operations are not practical, cumbersome and they cannot be actuated each time it is wished and necessary.

Solutions exits allowing, if necessary, the partial opening of the greenhouse, none of them being however particularly satisfying.

Furthermore, by this operation, a much quicker deterioration of the covering sheet occurs.

In view of the above, it is well evident the needing of having at disposal a system as the one suggested according to the present invention, allowing automatically manually or motorised opening and covering the greenhouse, winding the covering sheet in such a way to prevent the deterioration of the same sheet.

It is therefore specific object of the present invention a system for total and partial opening of a greenhouse covered by a sheet or film, said greenhouse providing at least a aisle, said aisle being longitudinally provided with a plurality of supports and arches, said system being characterised in that it provides a winding assembly for closing the greenhouse and a winding assembly for opening the greenhouse, each assembly providing a sheet winding tube, extending all along the greenhouse, and provided, at least on one of its ends, with driving means, at least two lower elements for guiding the rotation of the winding tube, in correspondence of each support of the greenhouse, at least an upper element for guiding the rotation of the winding tube, in correspondence of each support of the greenhouse, and at least an element for guiding the sheet during winding and unwinding about said winding tube, the system further comprising first means for fixing the sheet to the winding assembly for closing the greenhouse and second means for fixing the sheet to the winding assembly for opening the greenhouse.

Preferably, according to the invention, said driving means can be of the motorised or manual kind.

According to the invention, the driving means of the winding tube are activated when the sheet is wound, while those on the unwinding tube are idle.

Further, said driving means can be provided on one or both ends of the winding tube.

Always according to the invention, said at least to lower guide elements and said at least one upper guide element is comprised of wheels, mounted on suitable brackets.

Still according to the invention, said sheet guide element can be comprised of a tube extending all along the length of the greenhouse, i.e. of a wheel provided in correspondence of each support of the greenhouse.

Furthermore, according to the invention, said first fixing means can be comprised of a section bar element.

Still according to the invention, said second fixing means can be comprised of a plurality of strips, said strips being comprised of the same material of the sheet or of a material different from the material of the sheet, said strip being fixed at one end to a coupling section bar and at the other end at the winding tube.

Furthermore, according to the invention, said second fixing means can be comprised of an anti-insects net, fixed at one end at a coupling section bar and at the other end at the winding tube.

Always according to the invention, it is possible providing a completely independent additional system for opening and covering a shadowing sheet, a darkening sheet or like.

The present invention will be now described, for illustrative and not limitative purposes, according to its preferred embodiments, making particular reference to the figures of the enclosed drawings, wherein:
Figure 1 is a schematic view of an opening and covering system according to the invention;
Figure 2 shows a particular of the system according to figure 1; and
Figure 3 shows a particular of a further embodiment of the system according to the invention.

Making reference to both the figures of the enclosed drawings, it is shown an embodiment of the system according to the invention provided on a greenhouse, said greenhouse being generically indicated by reference number 1, having a plurality of aisles 2, extending longitudinally for many meters, supported by support poles 3, spaced along the length of the greenhouse, and a plastic material covering sheet 4.

In correspondence of the end of each aisle 2 a gutter 5 is provided, in correspondence of which the real sheet 4 winding system is provided. Obviously, for each aisle to analogous systems are provided for winding, on one side, and unwinding, on the other side, the sheet 4. Only one system will be described in the following, the other system being identical.

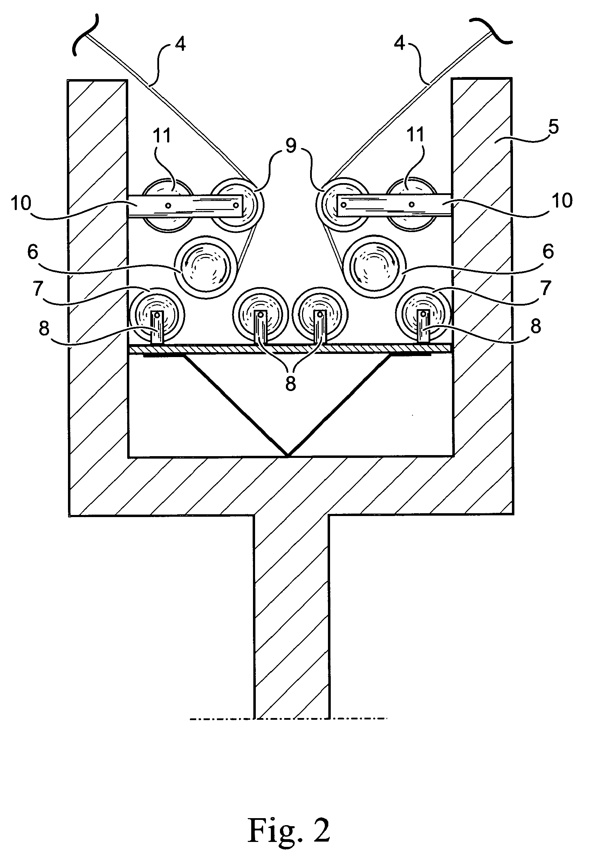

Observing particularly figure 2, it is possible noting some elements, all housed within the gutter 5, namely a roll 6, for winding the sheet 4, a pair of lower wheels 7, fixed at the bottom at the gutter 5 by a suitable bracket 8, an upper wheel 9, supported by a suitable bracket 10, and a guide tube 11 for the sheet, supported by the same bracket 10.

A wheel similar to the wheel 9 can be provided in place of said guide tube 11.

In correspondence of each one of the support poles of the aisle 2 of the greenhouse 1, an assembly comprising elements 7 - 11 is provided.

Said roll 6 is supported at the ends of the greenhouse 1, in correspondence of which winding means (not shown) are provided, said means being manual means or motorised means according to the needing.

Obviously, in correspondence of each gutter 5 it I provided the system of each aisle 2 of the greenhouse 1 ending on the same gutter 5.

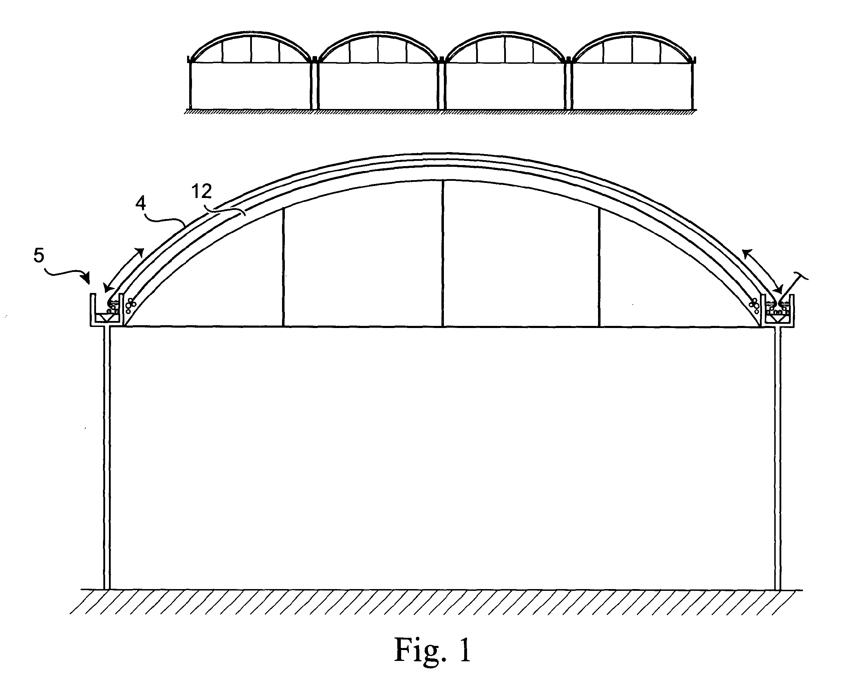

As it can be noted from figure 1, the system according to the invention can be provided also for stretching and winding a shadowing sheet 12, the mechanism being the same as described for the covering sheet 4.

In order to allow the complete unwinding the sheet 4, strips comprised of the same material of the sheet or of another material will be fixed, at the distance of each arch, on one end at a section bar for coupling between sheet 4 and tube 6 and, on the other end, at the closure winding tube.

At the beginning, sheet 4 is stretched and strips are completely wound on the tube 6, on the left of figure 1 (complete covering) (or vice versa).

In order to obtain a configuration with a partial covering, the sheet is wound on the right side tube 6 of figure 1, with the unwinding at the same time of the strips from the left side tube 6, and of the coupling section bar from the right side tube and consequent approaching to the left side tube 6. In this case, a part of greenhouse 1 open and a part closed will be obtained along the length of the aisle, said open part being useful for aeration.

If the complete opening of the greenhouse will be obtained, the above procedure will be further proceeded on.

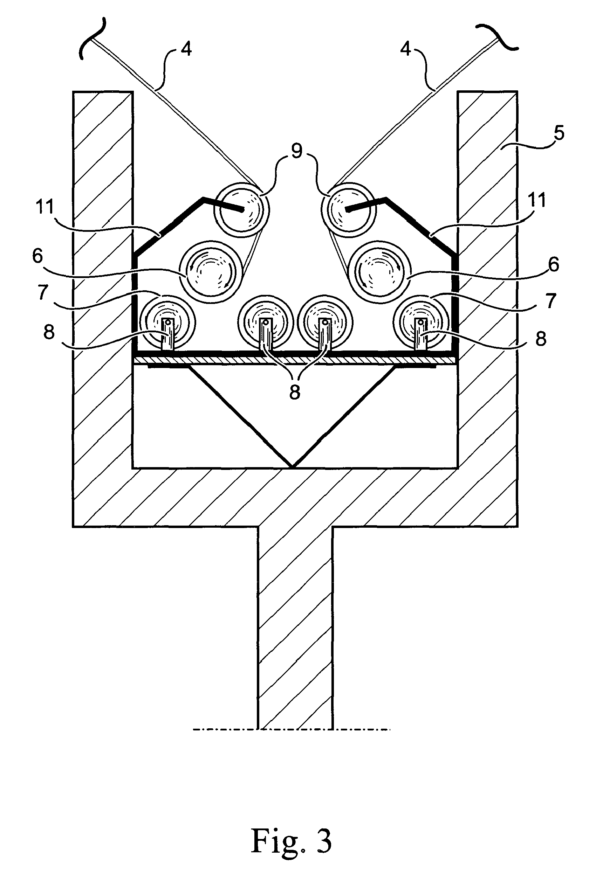

In figure 3, the embodiment is shown providing a single upper roll 9, and with the system supported by the structure 11, and not by the brackets.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System for total and partial opening of a greenhouse covered by a sheet or film, said greenhouse providing at least a aisle, said aisle being longitudinally provided with a plurality of supports and arches, said system being **characterised in that** it provides a winding assembly for closing the greenhouse and a winding assembly for opening the greenhouse, each assembly providing a sheet winding tube, extending all along the greenhouse, and provided, at least on one of its ends, with driving means, at least two lower elements for guiding the rotation of the winding tube, in correspondence of each support of the greenhouse, at least an upper element for guiding the rotation of the winding tube, in correspondence of each support of the greenhouse, and at least an element for guiding the sheet during winding and unwinding about said winding tube, the system further comprising first means for fixing the sheet to the winding assembly for closing the greenhouse and second means for fixing the sheet to the winding assembly for opening the greenhouse.

2. System for total and partial opening of a greenhouse covered by a sheet or film according to claim 1, **characterised in that** said driving means are of the motorised kind.

3. System for total and partial opening of a greenhouse covered by a sheet or film according to claim 1, **characterised in that** said driving means are of the manual kind.

4. System for total and partial opening of a greenhouse covered by a sheet or film according to each one of the preceding claims, **characterised in that** the driving means of the winding tube are activated when the sheet is wound, while those on the unwinding tube are idle.

5. System for total and partial opening of a greenhouse covered by a sheet or film according to each one of the preceding claims, **characterised in that** said driving means are provided on one or both ends of the winding tube.

6. System for total and partial opening of a greenhouse covered by a sheet or film according to each one of the preceding claims, **characterised in that** said at least to lower guide elements and said at least one upper guide element are comprised of wheels, mounted on suitable brackets.

7. System for total and partial opening of a greenhouse covered by a sheet or film according to each one of the preceding claims, **characterised in that** said sheet guide element is comprised of a tube extending all along the length of the greenhouse.

8. System for total and partial opening of a greenhouse covered by a sheet or film according to each one of the preceding claims 1 - 5, **characterised in that** said sheet guide element is comprised of a wheel provided in correspondence of each support of the greenhouse.

9. System for total and partial opening of a greenhouse covered by a sheet or film according to each one of the preceding claims, **characterised in that** said first fixing means are comprised of a section bar element.

10. System for total and partial opening of a greenhouse covered by a sheet or film according to each one of the preceding claims, **characterised in that** said second fixing means are comprised of a plurality of strips, said strips being comprised of the same material of the sheet or of a material different from the material of the sheet, said strip being fixed at one end to a coupling section bar and at the other end at the winding tube.

11. System for total and partial opening of a greenhouse covered by a sheet or film according to each one of the preceding claims, **characterised in that** said second fixing means are comprised of an anti-insects net, fixed at one end at a coupling section bar and at the other end at the winding tube.

12. System for total and partial opening of a greenhouse covered by a sheet or film according to each one of the preceding claims, **characterised in that** it is possible providing a completely independent additional system for opening and covering a shadowing sheet, a darkening sheet or like.
